# FASCICULE DE BREVET EUROPEEN

(11) **EP 0 653 729 B1**
(45) Date de publication et mention de la délivrance du brevet: **11.02.1998**
(21) Numéro de dépôt: 94402496.7
(22) Date de dépôt: 04.11.1994
(51) Int. Cl.: G07B 17/00

(54) **Dispositif d'alimentation en enveloppes incorporant une balance**
Zuführeinrichtung für Briefumschläge mit einer Waage
Envelope feeding device including a scale

(30) Priorité: 10.11.1993 FR 9313441
(43) Date de publication de la demande: 17.05.1995
(73) Titulaire: NEOPOST INDUSTRIE, F-92220 Bagneux (FR)
(72) Inventeur: Gregoire, Jean-Pierre, F-77170 Brie Comte Robert (FR); Van Lierde, Olivier, F-78170 La Celle Saint Cloud (FR)
(74) Mandataire: Joly, Jean-Jacques

(56) Documents cités:
- EP-A- 0 321 098
- WO-A-91/14238
- FR-A- 2 604 105
- FR-A- 2 668 725
- GB-A- 2 217 310
- US-A- 5 001 648

## Description

L'invention porte sur un dispositif d'alimentation en articles de courrier pour une machine à affranchir, comprenant une plate-forme destinée à recevoir au moins un article de courrier disposé à plat sur celle-ci et une pluralité de rouleaux présentant chacun un méplat, ces rouleaux étant montés à rotation sous la plate-forme pour occuper alternativement une première position selon laquelle ils restent en dessous de la plate-forme et une seconde position selon laquelle ils font saillie au dessus de la plate-forme.

Un tel dispositif d'alimentation est connu du document GB-2217310. Il est destiné en premier lieu à équiper une machine à affranchir modulaire pour l'expédition postale comportant un module d'affranchissement disposé en aval du dispositif ou module d'alimentation suivant le circuit de traitement des articles de courrier dans la machine. Dans cette machine d'expédition postale connue, une balance postale est interposée entre le module d'alimentation et le module d'affranchissement. Selon cet agencement, une pile d'articles de courrier, comme une pile d'enveloppes, est déposée sur la plate-forme du module d'alimentation qui fournit en sortie les enveloppes en série à la balance postale. Pour chaque enveloppe qu'elle reçoit du dispositif d'alimentation, la balance postale détermine la masse de l'enveloppe et le cas échéant le montant d'affranchissement qui y correspond en fonction de critères d'envoi de courrier définis par l'Administration postale et fournit l'enveloppe pesée et les données indicatives de sa masse ou son montant d'affranchissement au module à affranchir qui procède à l'apposition de l'empreinte postale appropriée au montant d'affranchissement sur l'enveloppe. Dans le document indiqué précédemment, la forme particulière des rouleaux a été envisagée pour appliquer sur l'enveloppe du bas de la pile d'enveloppes (celle qui repose sur la plate-forme) une force de traction par friction du type impulsionnelle ce qui contribue à la bonne séparation de l'enveloppe du reste de la pile d'enveloppes.

Un dispositif d'alimentation en articles de courrier analogue est décrit dans le document FR-2668725.

US-A-5 001 648 divulgue un dispositif de traitement de courrier comportant une balance.

Jusqu'à présent, une machine d'expédition postale comprend donc entre son entrée et sa sortie au moins trois modules distincts connectés en série pour successivement amener un article de courrier sur un plateau de pesée (le cas échéant après l'avoir séparé d'une pile d'articles de courrier déposée sur la plate-forme du module d'alimentation), peser l'article de courrier pour calculer un montant d'affranchissement et amener cet article de courrier sous une tête d'impression d'une empreinte postale, affranchir l'article de courrier et l'éjecter en sortie de la machine.

Le but de l'invention est de proposer une solution pour diminuer le nombre de modules constituant une machine d'expédition de courrier de façon à en réduire l'encombrement.

Un autre but de l'invention est d'augmenter les performances d'une telle machine d'expédition de courrier en diminuant la longueur du trajet que doit suivre un article de courrier entre l'entrée et la sortie de celle-ci sans remettre en cause sa modularité.

Selon l'invention, il est prévu au moins un capteur de pesée monté en dessous de la plate-forme pour porter celle-ci, ce capteur étant sensible à un déplacement vertical de la plate-forme de manière à délivrer un signal indicatif de la charge appliquée sur celle-ci lorsque les rouleaux occupent ensemble ladite première position. Ainsi la plate-forme du dispositif d'alimentation sert de plateau de pesée quand les rouleaux occupent une position selon laquelle ils sont tous en dessous de la plate-forme.

Par conséquent, selon l'invention, la balance postale est intégrée au dispositif d'alimentation de sorte qu'une machine d'expédition postale comprenant un tel dispositif d'alimentation est d'un faible encombrement et le parcours suivi par un article de courrier de l'entrée à la sortie d'un tel système d'expédition postale s'en trouve d'autant réduit.

Un capteur à jauge de contraintes convient bien pour le capteur de pesée car il délivre un signal proportionnel à la charge qui lui est appliquée.

Le dispositif d'alimentation selon l'invention convient tant pour l'alimentation en continu qu'à l'unité, c'est à dire pour accepter une pile d'articles de courrier ou un seul article de courrier déposé manuellement sur la plate-forme. Dans le cas où il est agencé pour fonctionner en continu, il permet d'augmenter les performances de la machine d'expédition postale qui l'emploie car la masse de chaque article de courrier qu'il fourni en sortie, après séparation de la pile d'article, peut être déterminée sur la base d'une différence des masses de cette pile d'articles déterminées avant et après la séparation de l'article de la pile d'articles, c'est à dire pendant l'intervalle de temps entre deux opérations successives de séparation d'un article de la pile d'articles dans un dispositif classique d'alimentation en continu. Il n'est donc plus nécessaire de marquer un temps d'arrêt supplémentaire, comme c'est le cas dans les machines d'expédition postale connues, pour déterminer la masse d'un article après que cet article soit séparé d'une pile d'articles.

L'arrangement selon lequel les rouleaux pour entraîner un article sur la plate-forme sont dissociés mécaniquement de la plate-forme et du capteur de pesée évite d'induire des vibrations intempestives au niveau du capteur de pesée.

Un exemple de réalisation de l'invention est maintenant décrit en détail ci-après en référence aux dessins.

La figure 1 est une vue en perspective d'une machine à affranchir modulaire comportant un module d'alimentation en enveloppes servant aussi de balance postale et un module d'affranchissement disposé en aval du module d'alimentation.

La figure 2 est une vue en coupe du module d'alimentation de la figure 1 selon la coupe II-II.

La figure 3 est une vue en coupe du module d'alimentation de la figure 1 selon la coupe III-III sur la figure 2.

La figure 4 est une vue de dessus du module d'alimentation de la figure 1.

La figure 5 est une vue schématique montrant le montage d'un capteur de pesée entre la plate-forme et la base du dispositif d'alimentation servant de balance.

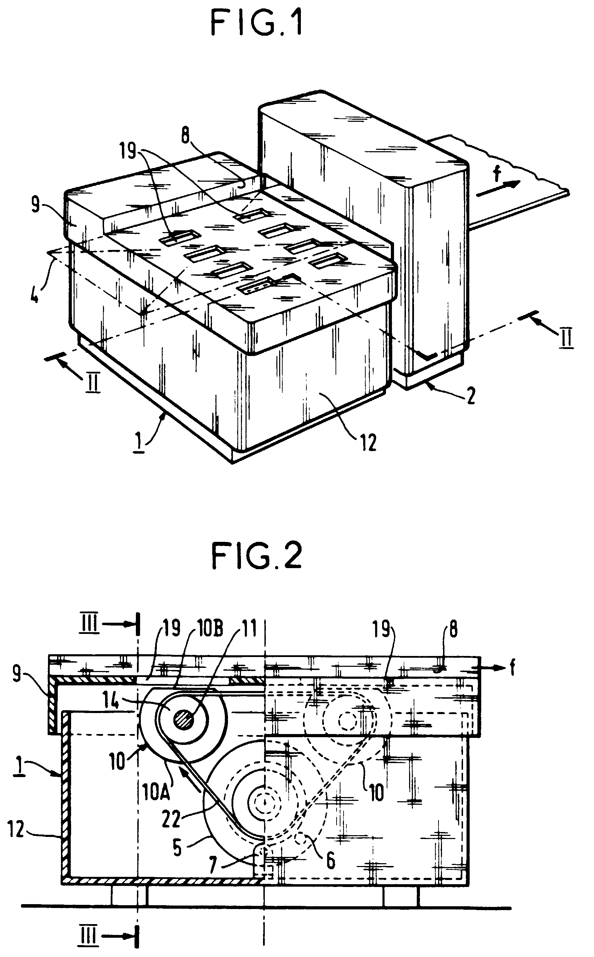

Sur les figures 1-4, le module d'alimentation est un module d'alimentation à l'unité en enveloppes, ou tout autre article de courrier. Il comprend une plate-forme 9 de forme sensiblement rectangulaire munie d'un rebord 8 dit "guide-pli". La plate-forme est montée sur une base 12 et sert à recevoir une enveloppe 4 (ou une pile d'enveloppes dans le cas d'un dispositif d'alimentation en continu).

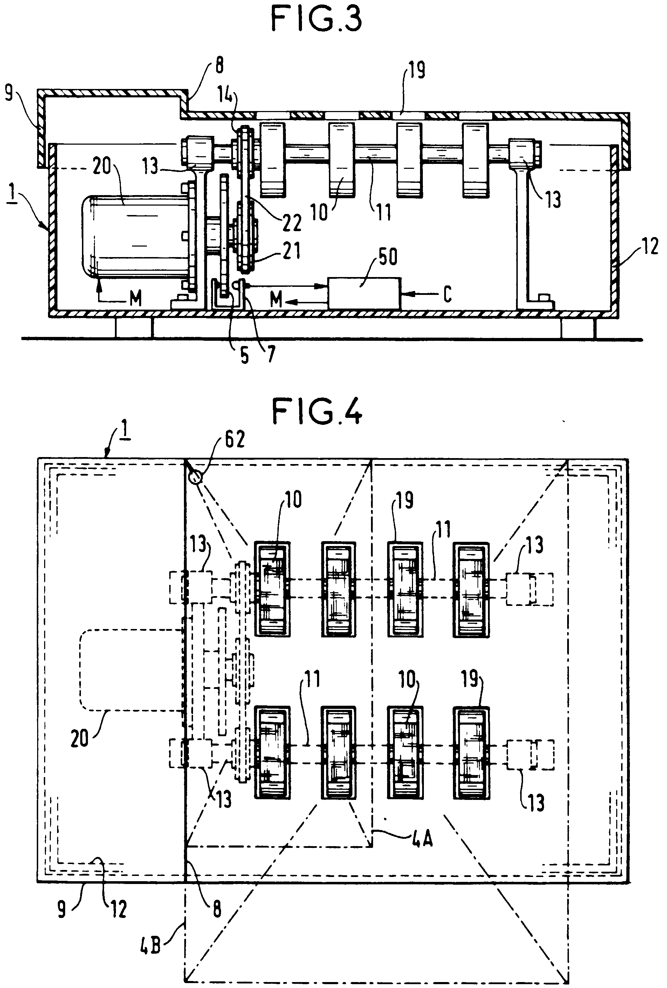

Des rouleaux d'entraînement 10 sont montés à rotation dans la base 12. Ils servent à faire avancer une enveloppe 4 (figure 1) disposée à plat sur la plate-forme, jusqu'à l'extrémité droite de la plate-forme sur la figure 1. L'enveloppe est donc déplacée sur la plate-forme, par les rouleaux, selon une direction d'avance montrée par la flèche f. Les rouleaux 10 sont alignés axialement en deux rangées de quatre rouleaux (figure 4) et calés angulairement par rapport à cette direction d'avance. Il est entendu que le nombre de rouleaux est adapté au type d'article de courrier à traiter et aux dimensions de la plate-forme.

Chaque rouleau 10 se présente sous la forme d'un cylindre ayant un secteur 10A circulaire et un secteur complémentaire plat 10B formant un méplat. Il est monté sur un axe d'entraînement rotatif 11. Sur les figures, quatre rouleaux sont montés sur un premier axe et quatre autres rouleaux sont montés sur un second axe parallèle au premier axe. Les deux axes 11 sont montés chacun sur deux paliers 13 solidaires de la base 12. Des fentes 19 sont aménagées dans la plate-forme 9 en vis-à-vis de chaque rouleau pour permettre le passage du secteur circulaire 10A des rouleaux 10 au travers de la plate-forme 9.

Les axes de rotation 11 sont positionnés par rapport à la plate-forme et selon la verticale de manière que pour une position angulaire des rouleaux 10 dans laquelle les secteurs plats 10B des rouleaux sont disposés horizontalement, le secteur plat 10B de chaque rouleau fait face à la fente 19 correspondante sans que le rouleau traverse la surface de la plate-forme (c'est-à-dire reste en dessous de la surface de la plate-forme). Pour une autre position angulaire des rouleaux (les secteurs plats 10B des rouleaux ne sont plus disposés horizontalement), le secteur circulaire 10A de chaque rouleau pénètre la fente 19 correspondante (c'est-à-dire fait saillie en dessus de la surface de la plate-forme).

Un moteur d'entraînement 20 est prévu dans la base 12 pour entraîner en rotation les rouleaux 10 par l'intermédiaire d'un système de transmission. Ce système de transmission comprend une poulie 21 montée sur l'arbre du moteur et deux poulies 14 montées respectivement sur les axes 11, la poulie 21 étant couplée aux poulies 14 par une bande d'entraînement 22 engageant les poulies 14 et 21. En variante, la motorisation 20 n'est pas montée dans la base 12 mais dans le module d'affranchissement 2 placé en aval du module d'alimentation 1 (figure 1) . Dans ce cas, il est nécessaire de prévoir entre les axes 11 et la motorisation 20, une transmission mécanique adaptée.

Lorsqu'un rouleau occupe sa première position angulaire, son secteur plat 10B n'est pas en contact avec l'enveloppe 4 disposée à plat sur la plate-forme 9. Lorsque le rouleau occupe une autre position angulaire, son secteur circulaire 10A est en contact avec l'enveloppe et soulève celle-ci au dessus de la plate-forme. Lorsque les rouleaux 10 sont entraînés en rotation, l'enveloppe reposant à plat sur la plate-forme 9 avance par à-coups sur celle-ci du fait que les rouleaux occupent alternativement leur première position et leur seconde position. Dans le cas d'un module d'alimentation en continu où la plate-forme 9 sert à recevoir une pile d'enveloppes, cette alternance de positions angulaires des rouleaux 10 facilite la séparation de la dernière enveloppe de la pile d'enveloppes.

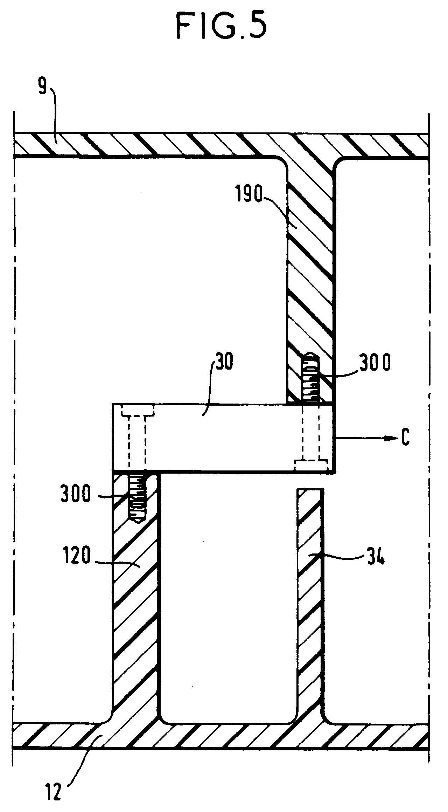

La plate-forme 9 est montée sur la base 12 pour servir aussi de plateau de pesée d'une enveloppe. Dans ce cas, un ou plusieurs capteurs de pesée 30 est ou sont disposés de façon adaptée entre la plate-forme 9 et la base 12 de telle manière à porter la plate-forme. Dans le cas d'un module d'alimentation à l'unité, un seul capteur de pesée suffit. Dans le cas d'un module d'alimentation en continu, il est préférable de prévoir quatre capteurs de pesée 30, de même sensibilité, qui sont placés respectivement aux quatre coins de la plate-forme. L'avantage d'un tel montage est de pouvoir traiter des piles d'enveloppes de masse importante sans être limité par les caractéristiques physiques et/ou géométriques d'un seul capteur de pesée. La figure 5 montre schématiquement le montage d'un capteur 30 entre la plate-forme 9 et la base 12. Le capteur 30 est un capteur à jauge de contraintes comme celui vendu par la société "SCAIME". Il est monté plus précisément entre une colonne 190 de la plate-forme (venue de moulage par exemple) et une colonne 120 de la base (venue de moulage), une de ses deux extrémités étant fixée rigidement à la colonne 190 par des vis 300, l'autre extrémité étant fixée rigidement à la colonne 120 par des vis 300. Lorsque la plate-forme 9 est chargée d'une ou d'enveloppes, le capteur 30 se déforme selon la direction verticale sous l'action conjointe des deux colonnes et fournit un signal C représentatif de la masse de la plate-forme ainsi que de la charge appliquée sur la plate-forme, par exemple par une enveloppe ou une pile d'enveloppe reposant sur celle-ci. Il est à noter que le déplacement de la plate-forme selon la direction verticale (déplacement rendu possible par déformation élastique du capteur 30 selon cette direction verticale) est typiquement de l'ordre de 3/10 de mm, ce déplacement devant bien entendu être inférieur à la différence des rayons d'un rouleau mesurés respectivement depuis un point de son secteur circulaire 10A et depuis un point de son secteur plat 10B.

Le dispositif de pesée constitué par la plate-forme 9 et le ou les capteurs de pesée 30 est découplé du dispositif de transport constitué par la plate-forme et les rouleaux 10. En position de pesée de la plate-forme 9, les rouleaux 10 occupent donc leur première position angulaire pour ne pas être en contact avec l'enveloppe reposant sur la plate-forme. Dans ce cas, le ou chaque capteur de pesée 30 fournit un signal représentatif de la charge appliquée sur le plateau de pesée. Chaque capteur de pesée est avantageusement protégé contre les surcharges excessives du plateau de pesée par une butée 34 agissant entre le capteur et la base 12 de sorte à éviter la détérioration accidentelle du capteur de pesée. La butée 34, faisant partie de la base (et venue de moulage par exemple), s'étend sous la plate-forme pour limiter son déplacement selon la direction verticale. Sur la figure 5, l'extrémité de la butée est disposée sous le capteur 30 (à 2 ou 3 mm sous celui-ci) de façon à limiter la déformation de celui-ci.

Un circuit électronique 50 est prévu dans la base 12 pour commander la mise en marche ou l'arrêt du moteur 20 (ou la transmission mécanique) qui entraîne en rotation les rouleaux 10. Normalement, le moteur est arrêté par le circuit 50 quand les rouleaux occupent leur première position angulaire (méplat 10B horizontal) de sorte à effectuer une opération de pesée pendant laquelle la charge appliquée à la plate-forme est déterminée sur la base du signal C fourni par chaque capteur 30. Lorsque le moteur 20 est mis en marche, les rouleaux tournent en occupant alternativement leur première et leur seconde position et l'enveloppe reposant sur la plate-forme est déplacée suivant la direction f jusqu'à quitter la plate-forme. Puis de nouveau, le circuit 50 commande l'arrêt de la rotation des rouleaux, c'est à dire l'arrêt du moteur 20, de préférence lorsque les rouleaux occupent la première position de façon à pouvoir recommencer une nouvelle opération de pesée.

L'instant à partir duquel le circuit doit arrêter le moteur 20 de telle manière que les rouleaux 10 occupent leur première position angulaire est défini par un signal fourni au circuit de commande 50 par une cellule photoélectrique 7 qui est montée dans la base 12. Cette cellule coopère avec une couronne 5 couplée à rotation avec les rouleaux de telle façon qu'une fenêtre 6 aménagée dans la couronne 5 est détectée par la cellule 7 quand les rouleaux occupent sensiblement leur première position angulaire. Cette couronne est montée par exemple sur l'arbre du moteur 20.

Le circuit 50 reçoit en plus des signaux C provenant des capteurs 30, des signaux provenant d'autres capteurs prévus pour fournir une indication de la position d'un article sur la plate-forme dont il faut déterminer la masse. Le circuit 50 fourni en sortie des signaux de commande (comme le signal M) pour commander l'arrêt ou la mise en marche du moteur 20 et actionner ou libérer un dispositif de freinage (non représenté) agissant sur les axes 11 et permettant un arrêt rapide des rouleaux dans leur première position angulaire.

Le circuit 50 est de préférence un microprocesseur dont le fonctionnement peut facilement être adapté par chargement d'un programme. En, particulier, la masse d'une enveloppe à peser peut être déterminée de différente façons selon le programme exécuté par le microprocesseur.

D'abord, si le module d'alimentation est du type à l'unité, le circuit 50 détermine la masse d'une enveloppe déposée sur la plate-forme directement sur la base du signal C fourni alors que les rouleaux occupent leur première position.

Maintenant, si le module d'alimentation est du type en continu, pouvant donc traiter une pile d'enveloppes, le circuit 50 détermine la masse de l'enveloppe du bas de la pile de la façon suivante. Il détermine d'abord la masse de la pile d'enveloppes sur la base du signal C produit par le ou les capteurs 30 si les rouleaux 10 occupent leur première position à l'instant t. Il commande ensuite la rotation des rouleaux 10 pour séparer l'enveloppe en question du reste de la pile d'enveloppes. L'enveloppe est donc extraite de la pile d'enveloppes et quitte la plate-forme alors que le circuit 50 arrête la rotation des rouleaux quand ceux-ci occupent leur première position. Puis il détermine de nouveau la masse de la pile d'enveloppes reposant sur la plate forme sur la base du signal C produit par le ou les capteurs 30 à l'instant t+t', t' étant le temps nécessaire à l'extraction de l'enveloppe du bas de la pile. Enfin, il détermine la masse de l'enveloppe qui vient d'être extraite de la pile d'enveloppes par différence entre la masse déterminée à l'instant t et la masse déterminée à l'instant t+t'.

Pour déterminer la masse de la pile d'enveloppes, ou même d'une seule enveloppe (cas de l'alimentation à l'unité), le circuit 50 peut procéder par mesure matricielle consistant à comparer un premier signal transitoire provenant du ou des capteurs 30 (numérisé) avec une pluralité de second signaux transitoires préalablement enregistrés sous forme numérique pour identifier un nombre estimé suffisant de similitudes entre le premier et un second signal transitoire. Ces signaux transitoires numérisés peuvent prendre la forme de signatures ce qui permet de réduire le temps nécessaire pour effectuer l'opération de pesée.

La figure 4 montre un capteur de position 62 qui fonctionne pour fournir une indication de la position de l'enveloppe (deux types d'enveloppe étant représentés par deux rectangles en traits interrompus 4A et 4B) par rapport au rebord guide-pli 8 sur la plate-forme. Suivant que le capteur 62 détecte la présence ou l'absence de l'enveloppe dans la zone choisie de la plate-forme, le circuit 50 est apte à en déduire le bon ou le mauvais positionnement de l'enveloppe et commander l'arrêt ou non du moteur en fonction de la détection. La zone de la plate-forme sur laquelle travaille le capteur 62 est choisie de façon à éviter d'une part, un écart important entre le bord de l'enveloppe à peser et le rebord guide-pli 8, et d'autre part un débordement de cette enveloppe sur l'extrémité haute (sur la figure 4) de la plate-forme 9. Un tel capteur de position est utile pour éviter un défaut d'alimentation et/ou un défaut de pesée.

Un tel module d'alimentation à l'unité ou en continu est destiné à équiper la machine à affranchir montrée sur la figure 1 qui comprend aussi un module d'affranchissement 2 muni d'un mécanisme d'impression tel qu'un tambour d'impression. Le module d'alimentation 1 disposé en amont du module d'affranchissement alimente celui-ci en enveloppes 4 qui lui sont fournies une par une. Lorsque le module d'affranchissement 2 récupère une enveloppe, il reçoit aussi du module d'affranchissement, via une ligne de transfert de données numériques par exemple, les paramètres indicatifs de la masse de l'enveloppe.

Le module d'affranchissement détermine un montant d'affranchissement qui est imprimé sur l'enveloppe par le tambour d'impression. Ce montant est fonction de la masse de l'enveloppe à affranchir mais aussi de ses dimensions, comme la longueur, la largeur et l'épaisseur. Il est avantageux de déterminer au plus tôt les dimensions de l'enveloppe à affranchir de façon à accélérer la cadence de traitement des enveloppes, notamment lorsque le module d'alimentation est du type en continu et comporte un séparateur d'enveloppes.

Pour cela, on peut prévoir un capteur fonctionnant pour détecter le passage d'une enveloppe le long de la plate-forme et sur la base de la vitesse de déplacement de l'enveloppe le long de la plate-forme, il est possible de déterminer la longueur de l'enveloppe. Si un tel capteur est placé en aval du séparateur, il peut aussi servir au circuit 50 pour commander l'arrêt du moteur d'entraînement des rouleaux lorsque l'enveloppe quitte le dispositif d'alimentation. Si d'autres de tels capteurs sont positionnés suivant une ligne transversale à la direction de déplacement de l'enveloppe le long de la plate-forme, il est possible de déterminer la largeur de l'enveloppe. L'épaisseur de l'enveloppe peut être déterminé par un capteur du type optoélectronique ou potentiométrique à bras oscillant et encodeur de position angulaire. Les signaux issus de ces différents capteurs peuvent être transmis directement au module d'affranchissement ou au circuit 50 qui est apte à calculer un montant d'affranchissement pour le module d'affranchissement.

## Revendications

1. Un dispositif d'alimentation en articles de courrier pour une machine à affranchir, comprenant une plate-forme (9) destinée à recevoir au moins un article de courrier (4;4A,4B) disposé à plat sur celle-ci et une pluralité de rouleaux (10) présentant chacun un méplat (10B), ces rouleaux étant montés à rotation sous la plate-forme pour occuper alternativement une première position selon laquelle ils restent en dessous de la plate-forme et une seconde position selon laquelle ils font saillie au dessus de la plate-forme, caractérisé par au moins un capteur (30) de pesée monté en dessous de la plate-forme pour porter celle-ci, ce capteur étant sensible à un déplacement vertical de la plate-forme de manière à délivrer un signal (C) indicatif de la charge appliquée sur celle-ci lorsque les rouleaux occupent ensemble ladite première position.

2. Le dispositif d'alimentation selon la revendication 1, dans lequel il est prévu quatre capteurs de pesée répartis sous la plate-forme, cette plate-forme ayant une surface de forme rectangulaire et les capteurs de pesée étant répartis aux quatre coins de la surface de la plate-forme.

3. Le dispositif d'alimentation selon la revendication 1, dans lequel chaque capteur est protégé contre des surcharges de la plate-forme par une butée (34) disposée sous la plate-forme.

4. Le dispositif d'alimentation selon l'une des revendications 1 à 3, dans lequel chaque capteur de pesée (30) est un capteur à jauge de contraintes.

5. Le dispositif d'alimentation selon l'une des revendications 1 à 4, dans lequel il est prévu un moyen de commande (50) relié au capteur de pesée, ce moyen de commande fonctionnant pour commander la rotation des rouleaux afin de déplacer un article de courrier sur la plate-forme jusqu'à une extrémité de celle-ci ou commander l'arrêt de la rotation des rouleaux de manière qu'ils occupent ladite première position afin de commencer une phase de pesée d'un article reposant sur la plate-forme.

6. Le dispositif d'alimentation selon la revendication 5, dans lequel le moyen de commande (50) commande l'arrêt de la rotation des rouleaux en réponse à un signal fourni par une cellule photoélectrique (7) coopérant avec une couronne (5) couplée en rotation avec les rouleaux (10).

7. Le dispositif d'alimentation selon la revendication 5, dans lequel le moyen de commande (50) est agencé pour fonctionner de la façon suivante lorsqu'une pile d'articles de courrier repose sur la plate-forme:
a) déterminer la masse de la pile d'articles de courrier reposant sur la plate-forme en réponse au signal fourni par chaque capteur (30) si les rouleaux (10) occupent la première position;
b) commander la rotation des rouleaux (10) pour séparer un premier article de courrier de la pile d'articles de courrier;
c) commander l'arrêt de la rotation des rouleaux (10) lorsqu'ils occupent la première position et que ledit premier article de courrier a été extrait de la pile;
d) déterminer la masse de la pile d'article de courrier reposant sur la plate-forme en réponse au signal fourni par chaque capteur (30);
e) calculer la masse dudit premier article sur la base de la différence entre la masse déterminée à l'étape a) et la masse déterminée à l'étape d)

8. Une machine à affranchir modulaire comprenant un dispositif d'alimentation (1) selon l'une des revendications 1 à 7 et un module d'affranchissement (2) connecté pour fonctionner avec le dispositif d'alimentation de telle façon à être alimenté par celui-ci à la fois en articles de courrier et en données indicatives de la masse de ces articles de courrier ou de leur montant d'affranchissement.

## Patentansprüche

1. Vorrichtung zur Zufuhr von Poststücken für eine Frankiermaschine, mit einer Plattform (9), die mindestens ein Poststück (4; 4A, 4B) aufnehmen kann, das flach auf dieser Plattform liegt, und mit mehreren Rollen (10), die je einen abgeflachten Sektor (10B) aufweisen und drehbar unter der Plattform montiert sind, um abwechselnd eine erste Winkelstellung einzunehmen, in der sie unterhalb der Plattform bleiben, und eine zweite Winkelstellung, in der sie über die Plattform vorstehen, gekennzeichnet durch mindestens eine Wägesonde (30), die unter der Plattform montiert ist und diese trägt, wobei diese Sonde auf eine vertikale Verschiebung der Plattform anspricht und ein Signal (C) liefert, das für die Last repräsentativ ist, die auf die Plattform einwirkt, wenn die Rollen alle ihre erste Stellung einnehmen.

2. Zufuhrvorrichtung nach Anspruch 1, in der vier Wägesonden vorgesehen sind, die unter der Plattform verteilt sind, wobei die Plattform eine rechtwinklige Oberfläche besitzt und die Wägesonden auf die vier Ecken der Oberfläche der Plattform verteilt sind.

3. Zufuhrvorrichtung nach Anspruch 1, in der jede Sonde gegen Überlastungen der Plattform durch einen unter der Plattform liegenden Anschlag (34) geschützt ist.

4. Zufuhrvorrichtung nach einem der Ansprüche 1 bis 3, in der jede Wägesonde (30) eine Kraftmeßsonde ist.

5. Zufuhrvorrichtung nach einem der Ansprüche 1 bis 4, in der ein Steuermittel (50) vorgesehen ist, das an die Wägesonde angeschlossen ist und die Drehung der Rollen so steuert, daß ein Poststück auf der Plattform bis zu einem Ende der Plattform befördert wird, oder das die Drehung der Rollen so anhält, daß sie die erste Stellung einnehmen, um eine Wiegephase eines auf der Plattform liegenden Poststücks zu beginnen.

6. Zufuhrvorrichtung nach Anspruch 5, in der das Steuermittel (50) das Anhalten der Rollendrehung abhängig von einem Signal steuert, das von einer photoelektrischen Zelle (7) geliefert wird, welche mit einem in Drehrichtung mit den Rollen (10) gekoppelten Kranz (5) zusammenwirkt.

7. Zufuhrvorrichtung nach Anspruch 5, in der das Steuermittel (50) so ausgebildet ist, daß es folgendermaßen arbeitet, wenn ein Stapel von Poststücken auf der Plattform ruht:
a) das Gewicht des Stapels von Poststücken auf der Plattform wird abhängig von dem durch jede Sonde (30) gelieferten Signal bestimmt, wenn die Rollen (10) die erste Stellung einnehmen;
b) die Drehung der Rollen (10) wird gesteuert, um ein erstes Poststück von dem Postgutstapel zu entnehmen;
c) die Drehung der Rollen wird angehalten, wenn sie die erste Stellung einnehmen und das erste Poststück aus dem Stapel entnommen worden ist;
d) das Gewicht des Stapels von Poststücken auf der Plattform wird aus dem von jeder Sonde (30) gelieferten Signal bestimmt;
e) das Gewicht des ersten Poststücks wird aus der Differenz zwischen den im Schritt a) und im Schritt d) bestimmten Gewichten berechnet.

8. Modular aufgebaute Frankiermaschine mit einer Zufuhrvorrichtung (1) nach einem der Ansprüche 1 bis 7 und einem Frankiermodul (2), der so angeschlossen ist, daß er mit der Zufuhrvorrichtung so zusammenwirkt, daß er von dieser sowohl Poststücke als auch Daten betreffend das Gewicht dieser Poststücke oder deren Frankierbetrag empfängt.

## Claims

1. A device for feeding mail items to a franking machine, including a platform (9) adapted to receive at least one mail item (4; 4A, 4B) laid flat on it and a plurality of rollers (10) each having a flat (10B), said rollers being mounted to rotate under the platform to occupy alternately a first position in which they remain below the platform and a second position in which they project above the platform, characterised by at least one weight sensor (30) mounted under the platform to carry it, said sensor being responsive to vertical displacement of the platform to deliver a signal (C) indicative of the load applied to it when the rollers are all substantially in said first position.

2. Feed device according to claim 1, in which four weight sensors are disposed under the platform which has a rectangular surface under each corner of which is one of the weight sensors.

3. Feed device according to claim 1, in which each sensor is protected against overloading of the platform by an abutment (34) disposed under the platform.

4. Feed device according to one of claims 1 to 3, in which each weight sensor (30) is a strain gauge.

5. Feed device according to one of claims 1 to 4, in which the control means (50) are provided which are connected to the weight sensor for commanding either rotation of the rollers to move a mail item on the platform to one end of the latter or halting of rotation of the rollers so that they occupy said first position in order to begin a phase of weighing an item resting on the platform.

6. Feed device according to claim 5, in which the control means (50) command halting of rotation of the rollers in response to a signal supplied by a photo-electric cell (7) co-operating with a ring (5) rotationally coupled to the rollers (10).

7. Feed device according to claim 5, in which the control means (50) are adapted to operate in the following manner when a stack of mail items is resting on the platform:
a) to determine the mass of the stack of mail items resting on the platform in response to the signal supplied by each sensor (30) if the rollers (10) occupy the first position;
b) to command rotation of the rollers (10) to separate a first mail item from the stack of mail items;
c) to command halting of rotation of the rollers (10) when they occupy the first position and said first mail item has been extracted from the stack;
d) to determine the mass of the stack of mail items resting on the platform in response to the signal supplied by each sensor (30);
e) to calculate the mass of said first item on the basis of the difference between the mass determined in step a) and the mass determined in step d).

8. Modular franking machine including a feed device (1) according to one of claims 1 to 7 and a franking module (2) connected to interwork with the feed device so that the latter feeds it with mail items and simultaneously supplies it with data indicative of the mass of the mail items or their franking amount.
